# EUROPEAN PATENT SPECIFICATION

(11) **EP 0 657 198 B1**
(45) Date of publication and mention of the grant of the patent: **03.09.1997**
(21) Application number: 94119525.7
(22) Date of filing: 09.12.1994
(51) Int. Cl.: B01D 35/01

(54) **Single stage fuel filter with seal control air purge**
Einstufiger Brennstofffilter mit geregeltes Entlüftungseinheit
Filtre de carburant dans une seule étape avec un système de purge d'air contrôlé

(30) Priority: 13.12.1993 US 166226; 30.09.1994 US 316508
(43) Date of publication of application: 14.06.1995
(73) Proprietor: STANADYNE AUTOMOTIVE CORP., Windsor Connecticut 06095 (US)
(72) Inventor: Janik, Leon P., Suffield, Connecticut 06078 (US); Maxwell, M. Craig, Colchester, Connecticut 06415 (US)
(74) Representative: Glawe, Delfs, Moll & Partner

(56) References cited:
- EP-A- 0 442 365
- EP-A- 0 547 951

## Description

### Background of the Invention

This invention relates generally to devices for filtering and separating liquids. More particularly, the present invention relates to filters for the fuel supply system or lubricating oil of an internal combustion engine and removing foreign particles and separating water therefrom.

The absence of high standards of quality control in diesel fuel supplies dictates that an effective fuel filter be incorporated into the fuel supply system of a diesel engine. It is not uncommon for diesel fuel to have significant quantities of abrasive particles and water. The abrasive particles present the potential for permanent damage to components of the fuel injection pump. The abrasive particles can also adversely affect the performance of the pump by destroying the ability of the fuel injection pump to precisely meter and deliver fuel at high pressures. The presence of water in the diesel fuel supply can cause corrosion of engine components, and during freezing conditions, can result in interruption of the fuel injection system and/or seizure of moving components. Similarly, water and particulate matter in the lubricating oil must be removed to minimize wear of engine parts.

Commonly, filters employ a disposable filter cartridge which is replaced at pre-established intervals of filter usage. The cartridge is secured to a base assembly that is fixedly mounted to the engine header or some other fixed location.

Current filter assemblies require a plurality of seals to seal the cartridge to the base assembly. The cartridge and base assembly are sealed to ensure that the fluid being filtered does not bypass the filter element in the cartridge. Additional seals may be employed to prevent short circuiting internal flow paths within the cartridge. The use of multiple seals increases the number of components, thereby increasing the cost of manufacture. In addition, the use of multiple seals increases the probability that a leak will occur.

For most, if not all diesel fuel delivery systems, as fuel circulates through the fuel filter, air pockets are formed in the fuel filter. The air pockets normally form at the top of the fuel filter. Air bubbles tend to form in the fuel as a result of gassing when exposed to changes in pressure. For pressurized fuel delivery systems, the air pockets tend to disintegrate over time and/or the stream of bubbles present in the fuel is of a relatively small magnitude. The air pockets generally do not result in the formation of large air bubbles in the fuel supply partly due to the vapor pressure of the pressurized fuel. Consequently, for pressurized systems, air pockets in the fuel filter do not present a significant problem or obstacle to the circulation of fuel through the fuel filter and the delivery of fuel to the engine.

However, in vacuum applications, the formation of air pockets in the fuel circulating through the filter can present a more significant problem. The air pockets are much more resistant to absorption over time in vacuum systems. Moreover, the vacuum suction exerted may result in the formation of tiny air bubbles or "gassing" in the fuel. This is especially true as the filter element approaches the end of its useful life and the pressure drop across the filter media increases. This increasing restriction to flow causes more air to be pulled from the fuel as the differential pressure between the clean side and the dirty side increases. In of themselves, these individual tiny bubbles do not present a problem to normal vehicle operation as they are easily ingested by the fuel injection pump. When subjected to pump charging pressures, the tiny bubbles are ordinarily reabsorbed by the fuel.

The problems in vacuum suction systems initially arise on the clean side of the filter element where the small bubbles inevitably collect, agglomerate and form air pockets, e.g., large bubbles. The large bubble formation will continue over a period of time until the physical attitude of the filter element changes due to vehicle maneuvering, etc. When these relative large air pockets or bubbles escape into the fuel flow, they are not easily ingested and may cause engine operating problems such as stalling or engine misfire.

EP-A-0547951 discloses a fuel filter cartridge including a housing having axially spaced first and second ends. A first seal is mounted in an axial opening in the first end of the housing. The first seal comprises an elastomeric member defining an axial opening and having an inner surface end an outer surface. A filter element having first and second ends is disposed in the housing and defines a central inner region on one side of the element and an outer region on the opposing side of the element. An endcap is mounted to the filter element second end. A conduit having axially opposite first and second ends is mounted to the endcap such that the conduit is disposed in the filter element inner region. A vent, defining a vent orifice, is disposed in the conduit. EP-A-0442365 discloses a fuel filter cartridge including a housing having axially spaced first and second ends. A first seal is mounted in an axial opening in the first end of the housing. The first seal comprises an elastomeric member defining an axial opening end having an inner surface and an outer surface. A filter element having first end second ends is disposed in the housing and defines a central inner region on one side of the element end an outer region on the opposing side of the element.

The problem to be solved by the present invention is how to provide an alternative way for controlling the size of the air baffles in the fuel supply. This object is solved by a fuel filter cartridge according to independent claim 1 and a fuel filter assembly according to independent claim 15.

### Summary of the Invention

Briefly stated, the invention in a preferred form is a fuel filter assembly which incorporates a filter cartridge having internal baffles and an internal vent to control air bubble formation and its adverse effects. The invention implements an improved seal to establish a controlled bleed path within the filter cartridge to meter the stream of air bubbles in the fuel supply exiting the filter.

The fuel filter is preferably of a type which includes a base which has a fuel inlet and a fuel outlet. A conduit interiorly defines a first axial passage which communicates with the inlet. A second conduit surrounds the first conduit and defines a second axial passage. The second axial passage communicates with the outlet.

The filter cartridge, which is mountable to the base, preferably includes at least one pleated filter element. The filter cartridge has a central axial bore that is dimensioned to receive the conduits. A sealing grommet mounted at the bore upper opening diametrally fluidically seals against the outer conduit. A first conduit disposed in the filter cartridge bore extends upward from a medial plate. The first conduit upper end defines a flange which receives the lower portion of the first sealing grommet. The inside surface of the flange seals against an outer circumferential ridge of the first sealing grommet. A second sealing grommet mounted adjacent the first conduit upper end diametrally seals against the inner base conduit. Fluted baffles angularly disposed on the first cartridge conduit outer surface are in fluid communication with the second base outlet conduit adjacent the first sealing grommet. A vent orifice opens radially through the first cartridge conduit adjacent the second sealing grommet. The orifice is dimensioned and located to limit and control the rate of escape and the size of air bubbles. The baffles define a flow path which tends to separate air bubbles from the fuel and thereby form an upper bubble collection zone within the cartridge since the bubbles tend to resist traversing downwardly around the baffles.

Other objects and advantages of the invention will become apparent from the drawings and the specification.

### Brief Description of the Drawings

The present invention may be better understood and its numerous objects and advantages will become apparent to those skilled in the art by reference to the accompanying drawings in which:
Figure 1 is a sectional view of a fuel filter assembly in accordance with one embodiment of the invention;
Figure 2 is an enlarged sectional view of the fuel filter cartridge of the filter assembly of Figure 1;
Figure 3 is a fragmentary sectional view of the fuel filter cartridge of Figure 2 taken along the line 3 - 3 thereof;
Figure 4 is a perspective view of the base portion of the fuel filter assembly of Figure 1;
Figure 5 is an enlarged fragmentary sectional view, partly in schematic, of the fuel filter assembly of Figure 1 illustrating the invention for a first fuel level; and
Figure 6 is an enlarged fragmentary sectional view, partly in schematic, of the fuel filter assembly of Figure 1 illustrating the invention for a second fuel level.

### Detailed Description of the Preferred Embodiment

With reference to the drawings wherein like numerals represent like parts throughout the several figures, a fuel filter assembly in accordance with the present invention is generally designated by the numeral 10. The filter assembly 10 is adapted for incorporation into the fuel supply system or lubricating oil system of an internal combustion engine (not illustrated), such as a diesel engine, for removing particulate matter from the fuel or oil and for separating water from the fuel or oil. The fuel filter assembly 10 is particularly adapted for incorporation into a fuel supply system which is operated under a vacuum.

Filter assembly 10 comprises a base assembly 20 and a disposable filter cartridge 50. The base assembly 20 is fixedly mounted to the engine header or other fixed location of the vehicle. Filter cartridge 50 is secured to the base assembly 20 by means of a retainer collar 100.

The base assembly 20 and the disposable cartridge 50 may assume a wide variety of configurations. For the disclosed embodiment, the base is an inverted cup-like receptacle which forms a skirt defining a lower receiving cavity for upper portions of a disposable cartridge. An elongated sleeve-like conduit 24 and an outer concentric sleeve-like conduit 26 having an axial end 28 provide generally coaxial fluid communication between the base and the disposable cartridge.

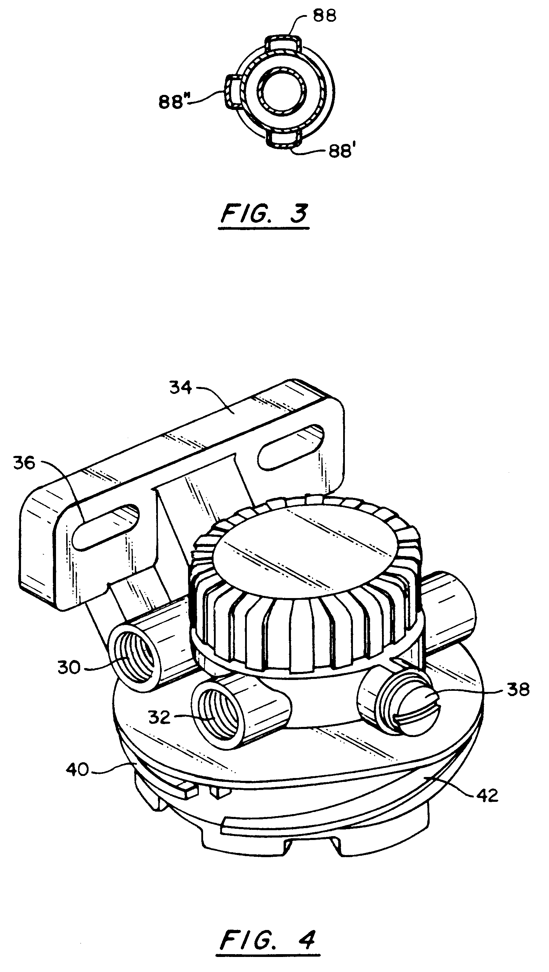

With reference to Figure 4, an inlet connector 30 at an upper side location of the base connects with the fuel line (not illustrated) to ultimately provide fluid communication through the interior passageway defined by the first conduit 24. An outlet connector 32 at an upper side location of the base connects with the fuel line to provide external fluid communication from the axial fluid conduit defined between the first and second conduits 24 and 26.

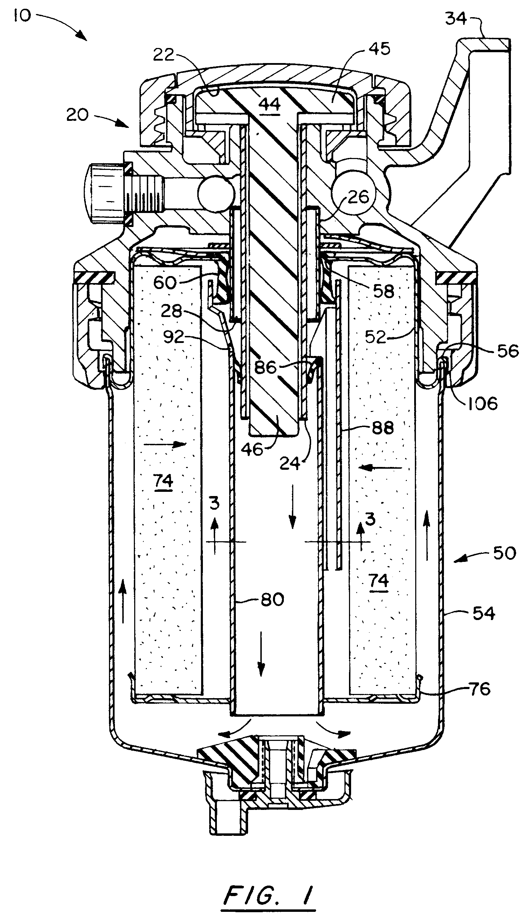

An integral projecting bracket 34 which may include a pair of openings 36 for anchoring the filter base to the engine header extends transversely from the base, as shown in Figure 1. Alternately, the base may not employ the described bracket structure but instead include a pair of fastener openings for receiving mounting fasteners. The base may also have an external air vent 38.

The base assembly 20 defines an interior cavity 22. A plug 44 may be disposed in the base assembly 20 such that shoulder 45 and an axially projecting column 46 of the plug occupy a substantial portion of the cavity 22 and the first conduit 24, respectively. The plug column 46 may extend the entire length of the conduit 24 and project slightly beyond the lower terminus thereof. The plug 44 may be composed of plastic or other suitable material and may have a solid or hollow core. As explained in U.S. Patent No. 5,312,546, assigned to the assignee of the present invention and the disclosure of which is incorporated herein by reference, the plug occupies a pre-established cartridge volume. When the filter cartridge 50 is axially dismounted from the base, the fuel cartridge 50 essentially gains free volume. The free volume gain allows for the fuel cartridge 50 to capture any fuel which may drain from the base.

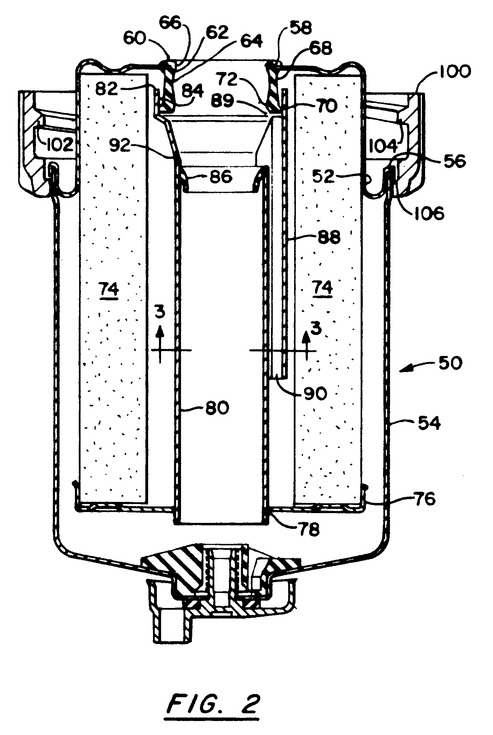

With reference to Figure 2, the disposable filter cartridge 50 comprises a can-like enclosure formed by a pair of opposed lower and upper cup-like sections 52, 54. The sections are joined along a circumferential roll seam 56. The upper section 52, which is smaller in diameter than the lower section, is received by the base receptacle. The upper section 52 is dimensioned to be closely accommodated in the base receptacle. A central axial opening 58 in the upper section is dimensioned to receive the conduits 24 and 26. A sealing grommet 60 mounted at the opening 58 diametrally fluidically seals against the outer conduit 26. The inside surface 62 of the grommet 60 has a shallow circumferential groove 64 defining a pair of circumferential ridge-like seal surfaces 66. The outside surface 68 of the grommet 60 has a circumferential ridge 70 on the lower portion 72 of the grommet 60.

The cartridge may employ a dual stage filter assembly or a single stage assembly as illustrated in Figures 1 and 2. A filter element 74 which has a continuous fan-shaped pleated configuration is mounted in the enclosure. The lower end of the element 74 is engaged by a medial plate 76 having a central opening 78. A tubular conduit 80 extends upward from the medial plate 76. The tubular conduit upper end 82 defines a throat of enlarged diameter which receives the lower portion 72 of the grommet 60. The inside surface 84 of the conduit upper end 82 seals against the outer circumferential ridge 70 of the grommet 60.

The second conduit 26 is received by the first sealing grommet 60 when the filter cartridge 50 is axially installed. The outer surface of the second conduit 26 is engaged by the seal surfaces 66 of the first sealing grommet 60, sealing the second conduit 26 and the filter cartridge 50. The axial force developed by the engagement of the second conduit 26 and the first sealing grommet 60 causes the outside circumferential ridge 70 of the first sealing grommet 60 to more firmly engage the inside surface 84 of the conduit upper end 82.

In a preferred embodiment, a second sealing grommet 86 extends from the inside surface of the tubular conduit 80 intermediate the upper end 82 and the medial plate 76, as shown in Figure 2. The second sealing grommet 86 is integrally molded with the tubular conduit 80 and is composed of thermoplastic. Alternatively, the second sealing grommet 86 may be composed of an elastomeric material and mounted inside the tubular conduit 80 intermediate the upper end 82 and the medal plate 76. The second sealing grommet 86 diametrally seals against the first conduit 24. At least one axially extending fluted baffle 88 is integrally disposed on the tubular conduit 80 outer surface. The fluted baffle 88 is in fluid communication with the upper portion of the tubular conduit 80 via a first opening 89 positioned adjacent the first grommet 60. The baffles each have an opening 90 at their lower ends and function as axial fluid passageways which ultimately communicate with the outlet conduit 26 of the base. For the embodiment illustrated in Figure 3, three angularly spaced fluted baffles 88, 88' and 88'' are employed. The fluted baffles 88 define a flow path which tends to separate the air bubbles from the fuel flowing through the filter. The bubbles resist traversal around the lower end of the baffles through the openings 90. Consequently, a bubble collection zone is created and continuously maintained at the upper portion of the cartridge on the clean side of the filter. The baffles 88 thus function as barriers to the bubble flow from the filter cartridge.

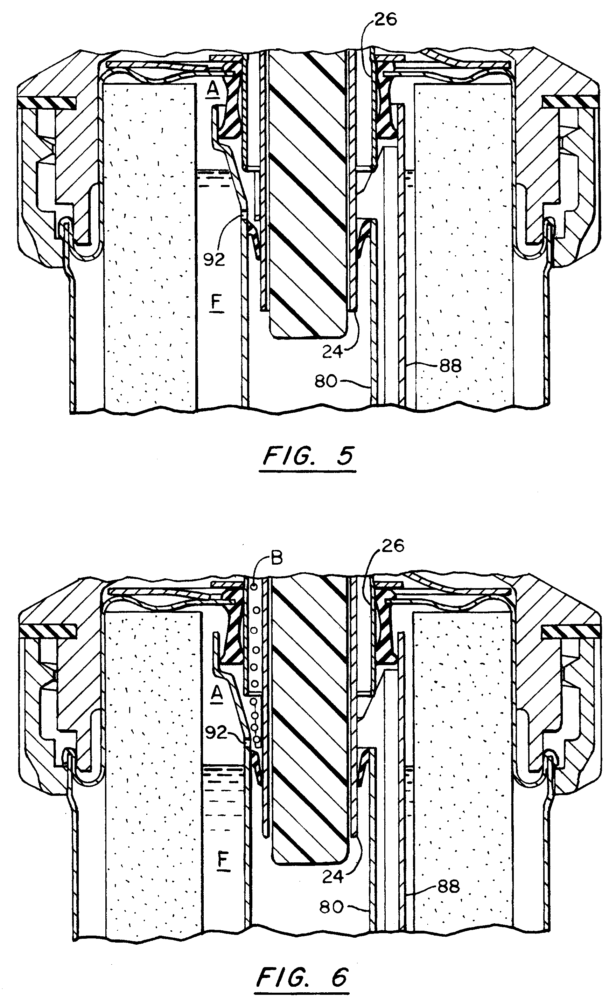

With reference to Figures 5 and 6, at least one vent orifice 92 opens radially through the tubular conduit 80 intermediate the second sealing grommet 86 and the baffle first opening 89. The orifice 92 is dimensioned and located to limit the size of air bubbles and to meter the flow of collected air bubbles to the upper end of conduit 80 and to the outlet conduit 26. Additional vent orifices may be axially spaced from the first vent orifice 92 to function as metering orifices if orifice 92 becomes plugged. The diameters of the orifices 92 in one embodiment are each approximately 0.015 inches.

The base may include a pair of integral outwardly projecting diametrically opposed ramps 40 and 42, as shown in Figure 1. The ramps ascend in spiral-like fashion around the base. The upper ends of the ramps are beveled. The collar includes a pair of diametrically disposed spiral followers 102 and 104 which integrally extend inwardly from the collar. The followers 102, 104 are dimensioned and positioned for engagement with the ramps 40, 42 so that the followers slidably engage and ascend the ramps upon alignment and angular rotation of the collar. The foregoing ramp and spring configuration may be substantially identical to that disclosed in co-pending U.S. Patent Application Serial No. 07/746,693 filed on August 16, 1991, which application is assigned to the assignee of the present invention and the disclosure of which is incorporated herein by reference. The collar 100 includes an inwardly projecting annular shoulder 106 which engages the roll seam 56 of the cartridge for releasably locking the cartridge to the base.

The fuel enters the fuel filter assembly 10 through the fuel inlet passage and exits the filter through the outlet passage. The general flow path of the fuel through the filter assembly is generally designated by the Figure 1 arrows. It will be appreciated that the fuel flow path initially axially traverses through the interior of the inner conduit 24. The circulation path extends generally axially upwardly and generally radially through the filter element 74 with the return flow path through the fluted baffles 88 and traversing between the inner conduit 24 and the outer conduit 26.

With reference to Figure 5, when the level of fuel F is above the orifice 92, fuel bleeds into the return passageway between conduits 24 and 26. The lower portion of the return passageway is filled with fuel. The orifice 92 allows for a generally continuous bleeding of fuel between the interior chamber formed by the filter element 74, the upper portion of conduit 80 and the lower end of conduit 26, provided the level of fuel F in the filter is at or above the height of the orifice 92. When the filter is initially filled such as with a hand primer, the fuel level will ordinarily not level off or deadhead within the filter cartridge until the fuel level covers the orifice 92. Therefore, the air space A above the fuel F will be limited by the position and dynamics of the orifice 92.

The orifice 92 functions as a bleed vent to control the formation of air bubbles in the fuel flow path particularly as the level of the fuel in the filter changes, such as may, for example, result from vehicle movement or cartridge attitude shifts. When the engine is started, a vacuum head draws fuel upwardly through the return passageway between conduits 24 and 26. If the level of fuel descends to a position which at least partially uncovers orifice 92, such as illustrated in Figure 6, air will bleed in a controlled fashion through the orifice 92 into the filtered fuel traversing the return passageway. The intermittent stream of air bubbles B will have no or a negligible effect on the delivery of fuel since the bubbles B will be relatively small in size. The orifice 92 functions to meter the flow of tiny bubbles above the fuel level by providing the air bleed to the return passage. The baffles function as barriers to limit the flow of bubbles to the outlet stream from the clean side of the filter element and to cause the bubbles to collect and be essentially stored at the interior top portion of the cartridge on the clean side of the filter.

## Claims

1. A fuel filter cartridge (50) having a housing (52, 54) having a first end defining an axial opening (58), an axially spaced second end, and a first seal (60) comprising an elastomeric member defining an axial opening and having an inner surface (62) and an outer surface (68), a filter element (74) disposed in the housing (52, 54) having a first end and an axially spaced second end and defining a central inner region on one side of the element and an outer region on the opposing side of the element, an endcap (76) mounted to the filter element second end, conduit means (80) being mounted on the endcap (76) and disposed in the filter element (74) inner region, the conduit means (80) having axially opposite first and second ends, vent means (92) disposed in the conduit means (80) for defining a vent orifice, characterized in that:
the endcap (76) defines a central opening (78);
the first seal (60) is mounted in the axial opening (58) and the first seal outer surface (68) comprises a first circumferential sealing surface (70);
the conduit means second end (82) defines an annular flange having an inside surface (84) which seals with the first sealing means first circumferential sealing surface (70);
the filter cartridge further comprises sealing means (86) mounted in the conduit means (80) intermediate said first and second (82) ends for sealing with a conduit received therein;
the filter cartridge further comprises baffle means (88) mounted to said conduit means (80) and defines an axial passage, said baffle means (88) being in fluid communication with the conduit means (80) intermediate the conduit means second end (82) and said sealing means (86); and
the vent means (92) is situated intermediate the conduit means second end (82) and said sealing means (86).

2. The filter cartridge of claim 1, characterized in that said sealing means (86) comprises a grommet integrally molded with said conduit means (80).

3. The filter cartridge of claims 1 and 2, characterized in that said sealing means (86) comprises an inwardly projecting seal surface.

4. The filter cartridge of claims 1-3, characterized in that said first sealing surface (70) extends from a lower portion (72) of said outer surface (68).

5. The filter cartridge of claims 1-4, characterized in that said baffle means (88) comprises a plurality of angularly spaced axially extending fluted baffles.

6. The filter cartridge of claims 1-5, characterized by a second vent orifice axially spaced from said first vent orifice (92).

7. The filter cartridge of claims 1-6, characterized in that the first seal inner surface (62) comprises a grommet defining inner axially spaced second and third seal surfaces (66).

8. The filter cartridge of claims 1-7, characterized in that said vent means (92) is positioned intermediate said sealing means (86) and the first seal (60).

9. The filter cartridge of claims 1-4, characterized in that said baffle means (88) comprises a plurality of angularly spaced fluted structures having axial openings (89, 90).

10. A fuel filter assembly having a base (20), a filter cartridge (50) mountable to the base (20) for filtering fuel, and a retainer (100) for retaining the filter cartridge (50) with the base (20), the base (20) having a fuel inlet (30), a fuel outlet (32), a first conduit (24) for interiorly defining a first axial passage, the first axial passage being in fluid communication with the inlet (30), a second conduit (26) for defining a second axial passage, the second axial passage being in fluid communication with the outlet (32), the filter cartridge (50) having at least one filter element (74), an end portion defining an axial opening (58) for communicating with the base second conduit (26), a first seal (60) for sealing the base second conduit (26) with the cartridge end portion, and defining a fuel path communicating with the base first axial passage, the base second axial passage and traversing the element (74), conduit means (80) for defining an axial passage and a portion of the fuel path, vent means (92) for defining a vent path, characterized in that:
the axial opening (58) receives the base first (24) and second (26) conduits;
the first seal (60) has an outside surface (68) with a circumferential seal surface (70);
the conduit means (80) communicates with the base first conduit (24) and comprises a first section (82) having a seal surface (84) surrounding the first seal surface (68), wherein said conduit means seal surface (84) engages the first seal surface (68);
the filter cartridge further comprises second seal means (86) for sealing the base first conduit (24) with said cartridge first conduit means (80) when the cartridge (50) is mounted to the base (20); and
the filter cartridge further comprises baffle means (88) comprising at least one axially extending baffle, said baffle means (88) being in fluid communication with the conduit means (80) wherein said baffle means (88) defines a portion of the flow path.

11. The fuel filter assembly of claim 10, characterized in that said cartridge conduit means (80) comprises second and third conduit sections, said second conduit section being in fluid communication with said base first axial passage, said third conduit section being in fluid communication with said base second axial passage.

12. The fuel filter assembly of claim 10, characterized in that said at least one baffle (88) has a pair of axially spaced openings (89, 90) and defines an axial passage.

13. The fuel filter assembly of claim 10, characterized by a second vent orifice axially spaced from said first vent orifice (92).

14. The filter cartridge of claim 10, characterized in that said second sealing means (86) comprises a grommet integrally molded with said conduit means (80).

15. The filter cartridge of claim 10, characterized in that said second sealing means (86) comprises a seal, said seal being mounted in said conduit means (80).

## Patentansprüche

1. Krafstoffilterpatrone (50), die ein Gehäuse (52, 54) mit einem ersten Ende, das eine axiale Öffnung (58) begrenzt, mit einem axial beabstandeten zweiten Ende und mit einer ersten Dichtung (60), die ein elastomeres Glied aufweist, das eine axiale Öffnung begrenzt und eine innere Oberfläche (62) und eine äußere Oberfläche (68) aufweist, ein Filterelement (74), das im Gehäuse (52, 54) angeordnet ist und ein erstes Ende und ein axial beabstandetes zweites Ende aufweist und einen mittigen inneren Bereich auf einer Seite des Elements und einen äußeren Bereich auf der gegenüberliegenden Seite des Elementes begrenzt, eine Endkappe (76), die am zweiten Ende des Filterelementes angebracht ist, Leitungsmittel (80), die an der Endkappe (76) angebracht sind und im inneren Bereich des Filterelementes (74) angeordnet sind, wobei die Leitungsmittel (80) axial gegenüberliegende erste und zweite Enden aufweisen, und Entlüftungsmittel (92) aufweist, die in den Leitungsmitteln (80) angeordnet sind, um eine Entlüftungsöffnung zu begrenzen, dadurch gekennzeichnet, daß
die Endkappe (76) eine mittige Öffnung (78) begrenzt;
die erste Dichtung (60) in der axialen Öffnung (58) angebracht ist und die äußere Oberfläche (68) der ersten Dichtung eine erste in Umfangsrichtung verlaufende Dichtoberfläche (70) aufweist;
das zweite Ende (82) der Leitungsmittel einen ringförmigen Flansch begrenzt, der eine innere Oberfläche (84) aufweist, die mit den ersten Dichtmitteln gegen die erste in Umfangsrichtung verlaufende Dichtfläche (70) abdichtet;
die Filterpatrone weiter Dichtmittel (86) aufweist, die in den Leitungsmitteln (80) zwischen den ersten und zweiten (82) Enden angebracht sind, um gegen eine darin aufgenommene Leitung abzudichten;
die Filterpatrone weiter Leitflächenmittel (88) aufweist, die an den Leitungsmitteln (80) angebracht sind und einen axialen Durchlaß begrenzen, welche Leitflächenmittel (88) in Fluidverbindung mit den Leitungsmitteln (80) zwischen dem zweiten Ende (82) der Leitungsmittel und den Dichtmitteln (86) sind; und
die Entlüftungsmittel (92) zwischen dem zweiten Ende (82) der Leitungsmittel und den Dichtmitteln (86) angeordnet sind.

2. Filterpatrone nach Anspruch 1, dadurch gekennzeichnet, daß die Dichtmittel (86) einen Dichtungsring aufweisen, der integral mit den Leitungsmitteln (80) geformt ist.

3. Filterpatrone nach Anspruch 1 und 2, dadurch gekennzeichnet, daß die Dichtmittel (86) eine nach innen vorstehende Dichtungsoberfläche aufweisen.

4. Filterpatrone nach den Ansprüchen 1 bis 3, dadurch gekennzeichnet, daß die erste Dichtfläche (70) sich von einem unteren Teil (72) der äußeren Oberfläche (68) erstreckt.

5. Filterpatrone nach den Ansprüchen 1 bis 4, dadurch gekennzeichnet, daß die Leitflächenmittel (88) eine Vielzahl von winkelmäßig beabstandeten sich axial erstreckenden ausgekehlten, genuteten oder geriffelten Leitflächen aufweisen.

6. Filterpatrone nach den Ansprüchen 1 bis 5, gekennzeichnet durch eine zweite Entlüftungsöffnung, die axial von der ersten Entlüftungsöffnung (92) beabstandet ist.

7. Filterpatrone nach den Ansprüchen 1 bis 6, dadurch gekennzeichnet, daß die innere Oberfläche (62) der ersten Dichtung einen Dichtungsring aufweist, der innere axial beabstandete zweite und dritte Dichtoberflächen (66) bildet.

8. Filterpatrone nach den Ansprüchen 1 bis 7, dadurch gekennzeichnet, daß die Entlüftungsmittel (92) zwischen den Dichtmitteln (86) und der ersten Dichtung (60) angeordnet sind.

9. Filterpatrone nach den Ansprüchen 1 bis 4, dadurch gekennzeichnet, daß die Leitflächenmittel (88) eine Vielzahl von winkelmäßig beabstandeten ausgekehlten, genuteten oder geriffelten Strukturen aufweisen, die axiale Öffnungen (89, 90) aufweisen.

10. Kraftstofffilteraufbau, der einen Grundteil (20), eine Filterpatrone (50), die am Grundteil (20) zum Filtrieren von Kraftstoff anbringbar ist, und ein Halteelement (100) zum Festhalten der Filterpatrone (50) am Grundteil (20) aufweist, wobei der Grundteil (20) einen Kraftstoffeinlaß (30), einen Kraftstoffauslaß (32), eine erste Leitung (24), um innen einen ersten axialen Durchlaß zu begrenzen, wobei der erste axiale Durchlaß in Fluidverbindung mit dem Einlaß (30) steht, und eine zweite Leitung (26) zum Begrenzen eines zweiten axialen Durchlasses aufweist, wobei der zweite axiale Durchlaß in Fluidverbindung mit dem Auslaß (32) steht, wobei die Filterpatrone (50) wenigstens ein Filterelement (74), einen Endbereich, der eine axiale Öffnung (58) für Verbindung mit der zweiten Leitung (26) des Grundteils aufweist, eine erste Dichtung (60) zum Dichten der zweiten Leitung (26) des Grundteils gegen den Endbereich der Patrone und die einen Kraftstoffweg begrenzt, der mit dem ersten axialen Durchlaß des Grundteils, dem zweiten axialen Durchlaß des Grundteils in Verbindung steht und durch das Element (74) hindurch geht, Leitungsmittel (80) zum Begrenzen eines axialen Durchlasses und eines Teils des Krafstoffweges, und Entlüftungsmittel (92) zum Begrenzen eines Entlüftungswegen aufweist, dadurch gekennzeichnet, daß
die axiale Öffnung (58) die erste (24) und zweite (26) Leitung des Grundteils aufnimmt;
die erste Dichtung (60) eine äußere Oberfläche (68) mit einer in Umfangsrichtung verlaufenden Dichtoberfläche (70) aufweist;
die Leitungsmittel (80) mit der ersten Leitung (24) des Grundteils in Verbindung stehen und einen ersten Abschnitt (82) aufweisen, der eine Dichtfläche (84) aufweist, die die erste Dichtfläche (68) umgibt, wobei die Dichtfläche (84) der Leitungsmittel an der ersten Dichtfläche (68) angreift;
die Filterpatrone weiter zweite Dichtmittel (86) zum Abdichten der ersten Leitung (24) des Grundteils gegen die ersten Leitungsmittel (80) der Patrone aufweist, wenn die Patrone (50) am Grundteil (20) angebracht ist; und
die Filterpatrone weiter Leitflächenmittel (88) aufweist, die wenigstens eine sich axial erstreckende Leitfläche aufweisen, welche Leitflächenmittel (88) in Fluidverbindung mit den Leitungsmitteln (80) stehen, wobei die Leitflächenmittel (88) einen Teil des Strömungsweges begrenzen.

11. Kraftstoffilteraufbau nach Anspruch 10, dadurch gekennzeichnet, daß die Leitungsmittel (80) der Patrone zweite und dritte Leitungsabschnitte aufweisen, wobei der zweite Leitungsabschnitt in Fluidverbindung mit dem ersten axialen Durchlaß des Grundteils steht, wobei der dritte Leitungsabschnitt in Fluidverbindung mit dem zweiten axialen Durchlaß des Grundteils steht.

12. Kraftstoffilteraufbau nach Anspruch 10, dadurch gekennzeichnet, daß wenigstens eine Leitfläche (88) ein Paar von axial beabstandeten Öffnungen (89, 90) aufweist und einen axialen Durchlaß begrenzt.

13. Kraftstoffilteraufbau nach Anspruch 10, gekennzeichnet durch eine zweite Entlüftungsöffnung, die axial von der ersten Entlüftungsöffnung (92) beabstandet ist.

14. Filterpatrone nach Anspruch 10, dadurch gekennzeichnet, daß die zweiten Dichtmittel (86) einen Dichtring aufweisen, der integral mit den Leitungsmitteln (80) geformt ist.

15. Filterpatrone nach Anspruch 10, dadurch gekennzeichnet, daß die zweiten Dichtmittel (86) eine Dichtung aufweisen, welche Dichtung in den Leitungsmitteln (80) angebracht ist.

## Revendications

1. Cartouche de filtre (50) de carburant dotée d'un boîtier (52, 54) comportant :
- une première extrémité définissant une ouverture axiale (58), une seconde extrémité espacée axialement et un premier joint (60) comprenant une pièce en élastomère définissant une ouverture axiale et ayant une surface intérieure (62) et une surface extérieure (68),
- un élément filtrant (74) disposé dans le boitier (52, 54) comprenant une première extrémité et une seconde extrémité espacée axialement et définissant une zone intérieure centrale sur un côté de l'élément filtrant (74) et une zone extérieure sur le côté opposé de l'élément filtrant (74),
- un chapeau d'extrémité (76) étant monté sur la seconde extrémité de l'élément filtrant (74), un moyen (80) formant conduit étant monté sur le chapeau d'extrémité (76) et étant disposé dans la zone intérieure de l'élément filtrant (74), le moyen (80) formant conduit ayant des première et seconde extrémités opposées axialement, des moyens (92) de mise à l'air libre étant disposés dans le moyen (80) formant conduit pour définir un orifice de mise à l'air libre,
**caractérisée en ce que**
- le chapeau d'extrémité (76) définit une ouverture centrale (78) ;
- le premier joint (60) est monté dans l'ouverture axiale (58) et en ce que la surface extérieure (68) du premier joint (60) se compose d'une première surface (70) circonférentielle d'étanchéité ;
- la seconde extrémité (82) du moyen formant conduit définit une bride annulaire ayant une surface intérieure (84) qui assure l'étanchéité avec la première surface (70) circonférentielle d'étanchéité du premier moyen d'étanchéité ;
- la cartouche de filtre comprend en outre un moyen d'étanchéité (86), monté dans le moyen (80) formant conduit entre lesdites première et seconde extrémités (82), pour assurer l'étanchéité avec un conduit logé dans la cartouche ;
- la cartouche de filtre comprend en outre un moyen (88) formant déflecteur monté sur ledit moyen (80) formant conduit, le déflecteur définissant un passage axial, ledit moyen (88) formant déflecteur assurant la communication, pour l'écoulement d'un fluide, avec le moyen (80) formant conduit entre la seconde extrémité (82) du moyen formant conduit et ledit moyen d'étanchéité (86) ; et
- les moyens (92) de mise à l'air libre sont placés entre la seconde extrémité (82) du moyen formant conduit et ledit moyen d'étanchéité (86).

2. Cartouche de filtre selon la revendication 1, caractérisée en ce que ledit moyen d'étanchéité (86) comprend une bague moulée solidairement avec ledit moyen (80) formant conduit.

3. Cartouche de filtre selon les revendications 1 et 2, caractérisée en ce que ledit moyen d'étanchéité (86) comprend une surface d'étanchéité en saillie vers l'intérieur.

4. Cartouche de filtre selon l'une quelconque des revendications 1 à 3, caractérisée en ce que ladite première surface d'étanchéité (70) s'étend à partir d'une partie inférieure (72) de ladite surface extérieure (68).

5. Cartouche de filtre selon l'une quelconque des revendications 1 à 4, caractérisée en ce que ledit moyen (88) formant déflecteur comprend une pluralité de déflecteurs cannelés s'étendant axialement et espacés de façon angulaire.

6. Cartouche de filtre selon l'une quelconque des revendications 1 à 5, caractérisée par un second orifice de mise à l'air libre espacé axialement dudit premier orifice (92) de mise à l'air libre.

7. Cartouche de filtre selon l'une quelconque des revendications 1 à 6, caractérisée en ce que la surface intérieure (62) du premier joint comprend une bague définissant des deuxième et troisième surfaces intérieures d'étanchéité (66) espacées axialement.

8. Cartouche de filtre selon l'une quelconque des revendications 1 à 7, caractérisée en ce que lesdits moyens (92) de mise à l'air libre sont positionnés entre ledit moyen d'étanchéité (86) et ledit premier joint (60).

9. Cartouche de filtre selon l'une quelconque des revendications 1 à 4, caractérisée en ce que ledit moyen (88) formant déflecteur comprend une pluralité de structures cannelées espacées de façon angulaire et ayant des ouvertures axiales (89, 90).

10. Ensemble formant un filtre de carburant comprenant :
- une base (20),
- une cartouche de filtre (50) pouvant être montée sur la base (20) pour filtrer le carburant,
- et un dispositif de retenue (100) pour retenir la cartouche de filtre (50) ainsi que la base (20),
- la base (20) comprenant une arrivée (30) de carburant, une sortie (32) de carburant, un premier conduit (24) pour définir intérieurement un premier passage axial, le premier passage axial assurant la communication avec l'arrivée (30) pour l'écoulement d'un fluide, comprenant un second conduit (26) pour définir un second passage axial, le second passage axial assurant la communication avec la sortie (32) pour l'écoulement d'un fluide, la cartouche de filtre (50) comprenant au moins un élément filtrant (74), une extrémité définissant une ouverture axiale (58) pour communiquer avec le second conduit (26) de la base, un premier joint (60) pour assurer l'étanchéité du second conduit (26) de la base avec l'extrémité de la cartouche, et définissant un cheminement du carburant communiquant avec le premier passage axial de la base, avec le second passage axial de la base et traversant l'élément (74), comprenant un moyen (80) formant conduit pour définir un passage axial et une partie du cheminement du carburant, des moyens (92) de mise à l'air libre pour définir un cheminement de mise à l'air libre,
**caractérisé en ce que**
- l'ouverture axiale (58) loge les premier (24) et second (26) conduits de la base ;
- le premier joint (60) comprend une surface extérieure (68) ainsi qu'une surface (70) circonférentielle d'étanchéité ;
- le moyen (80) formant conduit communique avec le premier conduit (24) de la base, et en ce que ledit moyen formant conduit comprend une première section (82) ayant une surface d'étanchéité (84) entourant la surface (68) du premier joint, où ladite surface d'étanchéité (84) du moyen formant conduit s'engage dans la surface (68) du premier joint ;
- la cartouche de filtre comprend en outre un second moyen d'étanchéité (86) pour assurer l'étanchéité du premier conduit (24) de base avec ledit premier moyen (80) formant conduit de la cartouche lorsque la cartouche (50) est montée sur la base (20) ; et
- la cartouche de filtre comprend en outre un moyen (88) formant déflecteur comprenant au moins un déflecteur s'étendant axialement, ledit moyen (88) formant déflecteur assurant la communication, pour l'écoulement d'un fluide, avec le moyen (80) formant conduit, où ledit moyen (88) formant déflecteur définit une partie du cheminement du fluide.

11. Ensemble formant un filtre de carburant selon la revendication 10, caractérisé en ce que ledit moyen (80) formant conduit de la cartouche comprend des deuxième et troisième sections du conduit, ladite deuxième section du conduit assurant la communication avec ledit premier passage axial de la base pour l'écoulement d'un fluide, ladite troisième section du conduit assurant la communication avec ledit second passage axial de la base pour l'écoulement d'un fluide.

12. Ensemble formant un filtre de carburant selon la revendication 10, caractérisé en ce que au moins un déflecteur (88) comprend une paire d'ouvertures (89, 90) espacées axialement, et en ce que le déflecteur définit un passage axial.

13. Ensemble formant un filtre de carburant selon la revendication 10, caractérisé en ce qu'il comprend un second orifice de mise à l'air libre espacé axialement dudit premier orifice (92) de mise à l'air libre.

14. Cartouche de filtre selon la revendication 10, caractérisée en ce que ledit second moyen d'étanchéité (86) se compose d'une bague moulée solidairement avec ledit moyen (80) formant conduit.

15. Cartouche de filtre selon la revendication 10, caractérisée en ce que ledit second moyen d'étanchéité (86) se compose d'un joint, ledit joint étant monté dans ledit moyen (80) formant conduit.
